(19) Europäisches Patentamt / European Patent Office / Office européen des brevets

(11) **EP 3 454 443 B1**

(12) **EUROPEAN PATENT SPECIFICATION**

(45) Date of publication and mention
of the grant of the patent:
**08.12.2021 Bulletin 2021/49**

(21) Application number: **16906092.8**

(22) Date of filing: **19.10.2016**

(51) Int Cl.:
***H02J 7/00*** *(2006.01)*

(86) International application number:
**PCT/CN2016/102620**

(87) International publication number:
**WO 2017/219552 (28.12.2017 Gazette 2017/52)**

(54) **CHARGING METHOD AND DEVICE AND STORAGE MEDIUM**

AUFLADEVERFAHREN UND VORRICHTUNG SOWIE SPEICHERMEDIUM

PROCÉDÉ ET DISPOSITIF DE CHARGE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2016 CN 201610472147**

(43) Date of publication of application:
**13.03.2019 Bulletin 2019/11**

(73) Proprietor: ZTE Corporation
**Shenzhen, Guangdong 518057 (CN)**

(72) Inventor: **DOU, Mingming**
**Shenzhen**
**Guangdong 518057 (CN)**

(74) Representative: **Lavoix**
**Bayerstraße 83**
**80335 München (DE)**

(56) References cited:
WO-A2-2016/085315     CN-A- 101 335 369
CN-A- 101 908 776     CN-A- 102 214 938
CN-A- 104 765 396     US-A1- 2013 132 742
US-A1- 2014 217 958     US-A1- 2016 172 886

**Description**

**TECHNICAL FIELD**

The disclosure relates to a battery charging technology, and in particular to a charging method and device, and a storage medium.

**BACKGROUND**

In the process of using a mobile terminal, some use scenarios or using habits of a user may cause accelerated aging of a battery of the mobile terminal. For example, a driver of a VIP car or a taxi may connect the mobile terminal to a charging device for a long time.

Secondary charging refers to that the mobile terminal or other devices will stop charging after a full charge, but due to the power consumption of a system of the devices, the normal voltage drop of the battery and other factors, the devices will be charged when the devices are connected to the charging device and the battery level drops. Charging timeout refers to that the device is allowed to be charged within the given time, but will be forbidden to be charged after the given time.

Due to the power consumption of the system of the mobile terminal, the normal voltage drop of the battery and other factors, the mobile terminal continues to be charged when it is connected to the charging device and the battery level drops. Such a charging behavior will cause the battery to be secondary-charged in an almost full charge state for long time. The repeated secondary charging causes a huge damage to the battery, and reduces the service life of the battery.

Further relevant technologies are also known from US 20141217958 A1 (VERDUN GARY JOSEPH [USA ET AL) 7 August 2014 (2014-08-07) which relates to a computer-implemented method and information handling system manage a rate of decreasing full capacity of a rechargeable battery by using a projected/target rate of decreasing charge capacity for the battery, US 2016/172886 A1 (KEATES ANDREW [US]) 16 June 2016 (2016-06-16) which relates to an apparatus for extending cycle-life of a battery cell, WO 20161085316 A2 (UNIV INT RABAT [MA]) 2 June 2016 (2016-06-02) which relates to an electrical charger capable of communicating with a telephone through a mobile application, and US 20131132742 A1 (ZHAO SHUANGCHENG [CN] ET AL) 23 May 2013 (2013-05-23) which relates to charging control methods for a rechargeable battery and portable computers.

**SUMMARY**

The embodiments of the disclosure are intended to provide a charging method and device, and a storage medium, for solving the problem of short service life of a rechargeable battery. The present disclosure provides a charging method according to independent claim 1, and a charging device according to independent claim 2. Further improvements and embodiments are provided in the dependent claims.

One of the above technical solutions has advantages or beneficial effects as follows.

The secondary charging threshold is initialized to obtain the default value of the secondary charging threshold; the secondary charging threshold adjustment parameter is obtained when the electronic device is connected to the power adapter; it is determined, according to the secondary charging threshold adjustment parameter, whether the secondary charging threshold is required to be adjusted, to obtain the determination result; when the determination result indicates that the secondary charging threshold is required to be adjusted, the secondary charging threshold is adjusted from the default value to the present value smaller than the default value; and the secondary charging control is performed by using the present value. In this way, in the case of continuous secondary charging, the battery loss is reduced to the maximum extent, and the service life of the battery is extended.

**BRIEF DESCRIPTION OF DRAWINGS**

FIG. 1 is a flowchart of a charging method according to an embodiment of the disclosure.
FIG. 2 is a flowchart of adjusting a secondary charging threshold in a vehicular mode according to an embodiment of the disclosure.
FIG. 3 is a flowchart of adjusting the secondary charging threshold in the case of battery aging according to an embodiment of the disclosure.
FIG. 4 is a flowchart of adjusting the secondary charging threshold in the case of charging for long time according to an embodiment of the disclosure.

FIG. 5 is a flowchart of adjusting the secondary charging threshold in different charging scenarios according to an embodiment of the disclosure.

FIG. 6 is a block diagram of a charging device according to an embodiment of the disclosure.

**DETAILED DESCRIPTION**

For making the technical solutions to be solved, the technical solutions and the advantages of the disclosure more clear, the disclosure is further elaborated below in combination with the accompanying drawings and specific embodiments.

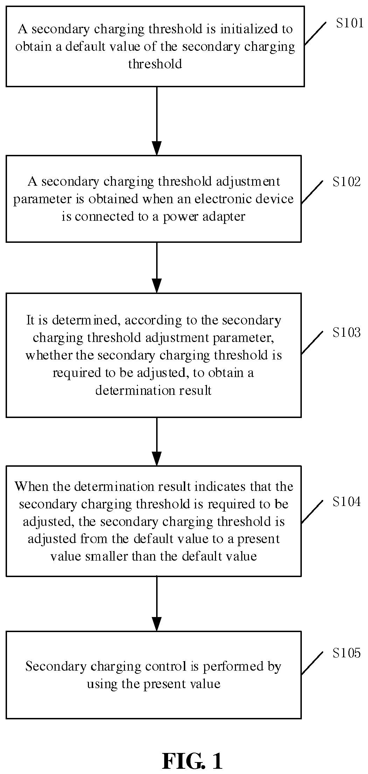

FIG. 1 shows a flowchart of the charging method according to an embodiment of the disclosure. The flow includes the following operations.

At S101, a secondary charging threshold is initialized to obtain a default value of the secondary charging threshold.

At S102, a secondary charging threshold adjustment parameter is obtained when an electronic device is connected to a power adapter.

At S103, it is determined, according to the secondary charging threshold adjustment parameter, whether the secondary charging threshold is required to be adjusted, to obtain a determination result.

At S104, when the determination result indicates that the secondary charging threshold is required to be adjusted, the secondary charging threshold is adjusted from the default value to a present value smaller than the default value.

At S105, secondary charging control is performed by using the present value.

In the embodiment, the secondary charging threshold adjustment parameter, which may be various parameters, is obtained, and it is determined, according to the secondary charging threshold adjustment parameter, whether it is required to perform secondary charging. When it is required to perform secondary charging, the secondary charging threshold is adjusted to the present value smaller than the initial default value. By adjusting the secondary charging threshold to perform the secondary charging control on the battery, and further reducing the number of secondary charging times, the behaviors of secondary charging of the battery in an almost full charge state for long time are reduced to the maximum extent. In this way, the battery loss may be reduced to the maximum extent, the service life of the battery may be extended, and the service efficiency of the battery may be improved.

In the embodiment, it is required to determine, according to the secondary charging threshold adjustment parameter, whether to reduce the secondary charging threshold. The secondary charging threshold adjustment parameter may be various parameters, which are respectively described as follows.

<The secondary charging threshold adjustment parameter is a working mode parameter>

In this manner, the secondary charging threshold adjustment parameter is the working mode parameter. In the operation of determining, according to the secondary charging threshold adjustment parameter, whether the secondary charging threshold is required to be adjusted, when the working mode parameter indicates that the electronic device works in the vehicular mode, the determination result indicates that the secondary charging threshold is required to be adjusted is obtained.

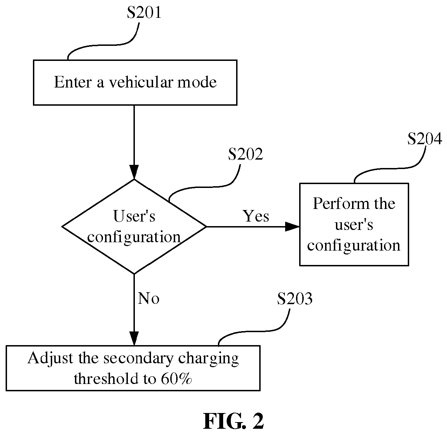

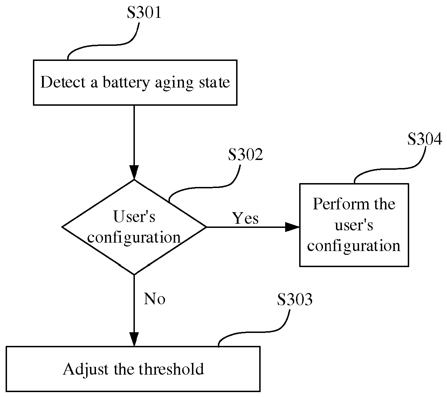

FIG. 2 shows a flowchart of adjusting the secondary charging threshold in the vehicular mode according to an embodiment of the disclosure. The flow includes the following operations.

At S201, the mobile terminal enters the vehicular mode.

At S202, when a process related to the vehicular mode is started, a monitoring process may query it, and performs a corresponding operation in a charging module. When detecting that it is in a charging state and in the vehicular mode, the mobile terminal detects whether a user configures the secondary charging threshold and a charging timeout threshold.

At S203, when the user does not configure the secondary charging threshold, the secondary charging threshold is adjusted to the present value.

In the embodiment, if the battery capacity is 3000 mAh, the consumption current in a navigation mode is 300 mA, and the user uses, from a full charge state, a navigation mode for a full morning or afternoon (the duration is 4 hours), then the power consumption of 4 hours is 1200 mAh, and the present value may be set to 70%.

At S204, when the user configures the secondary charging threshold, a user configuration is performed.

In the embodiment, the user configures the secondary charging threshold to be 70%, that is, when the battery level is smaller than 70%, secondary charging is performed.

Many drivers have a habit of keeping the mobile terminal connected to the charging device, or have a job demand of running a car-hailing app, and in the vehicular mode, the mobile terminal is always in a larger load state, so secondary charging is continually performed on the battery, which causes a huge damage to the battery. In the actual use process, the secondary charging threshold is adjusted to maintain the charging behavior in a controllable range, prevent the battery from being in a secondary charging state for long time, and reduce the number of secondary charging times of the battery, thereby reducing the damage to the battery to the maximum extent, extending the service life of the battery, and improving the service efficiency of the battery.

An example about this is given as follows.

It is assumed that the battery capacity is 3000 mAh, the consumption current in the navigation mode is 300 mA (that is, 5% capacity is consumed every half an hour), the initial secondary charging threshold is 95%, and the present value in the embodiment is set to 70%.

It is assumed that a taxi driver working from 1 p.m. to 7 p.m. uses the navigation mode from the full charge state. According to a charging solution provided by the related technology, it is required to charge every half an hour, and the number of charging times in 6 hours is 12. However, if the method of the embodiment is adopted, charging is performed every 3 hours, and the number of charging times in 6 hours is only 2, so the number of charging times is 1/6 of that in the related technology. When a smaller present value is set, the number of charging times is smaller.

However, in order to ensure a certain battery level of the mobile terminal when the user leaves the car any time, the present value is usually not smaller than 60%.

<The secondary charging threshold adjustment parameter is a battery aging coefficient>

In this manner, the secondary charging threshold adjustment parameter is the battery aging coefficient. In the operation of determining, according to the secondary charging threshold adjustment parameter, whether the secondary charging threshold is required to be adjusted, when the battery aging coefficient is smaller than a first predetermined threshold, the determination result indicates that the secondary charging threshold is required to be adjusted is obtained.

In the operation of adjusting the secondary charging threshold from the default value to the present value smaller than the default value, the smaller the battery aging coefficient, the smaller the present value.

FIG. 3 shows a flowchart of adjusting the secondary charging threshold in the case of battery aging according to an embodiment of the disclosure. The flow includes the following operations.

At S301, a battery aging state is checked, and the battery aging coefficient is obtained. The battery aging state is calculated through the number of charging and discharging times of the battery, the coulomb, namely the data of a complete charge-discharge process, and the running time of the battery in a high-temperature state.

At S302, based on S301, when the mobile terminal detects that the battery is aging, it is further checked that whether the user configures the secondary charging threshold and the charging timeout threshold.

At S303, when the user does not configure the secondary charging threshold, the secondary charging threshold is adjusted from the default value to the present value smaller than the default value. The secondary charging threshold is configured according to the following piecewise function.

At S304, when the user configures the secondary charging threshold, the user configuration is performed.

With the increase of the number of charge-discharge times and the service time of the battery, the aging degree of the mobile terminal battery is deepened. According to the difference of the aging degrees, different secondary charging thresholds are set, which are represented by the following piecewise functions:

$$\text{threshold} \begin{cases} \text{threshold} = (\text{aging coefficient} * 100)\%, \\ \text{when the aging coefficient is between 0.6 and 0.9;} \\ \text{threshold} = 60\%, \\ \text{when the aging coefficient is smaller than 0.6} \end{cases}$$

The threshold in the above piecewise functions may be adjusted by the user according to the actual conditions.

The aging coefficient is a ratio of the current maximum available capacity to a rated capacity. If the aging coefficient is 0.8, then the maximum available capacity of the mobile terminal has dropped to 80% of the available capacity while leaving factory. In the process of using the mobile terminal, aging happens all the time, so the values of the threshold set in the embodiment keep a linear relation when the aging coefficient is greater than 0.6. In practical applications, for the battery whose aging coefficient is smaller than 0.6, the aging degree is very serious, and the battery is basically in a discarding state. In the embodiment, the threshold is set to 60%. Setting the threshold to about 60% may ensure a certain power consumption for the use while reducing the number of secondary charging times of the battery to some extent, thereby extending the service life of the battery.

<The secondary charging threshold adjustment parameter is continuous charging time>

In this manner, the secondary charging threshold adjustment parameter is the continuous charging time. In the operation of determining, according to the secondary charging threshold adjustment parameter, whether the secondary charging threshold is required to be adjusted, when the continuous charging time is greater than the second predetermined threshold, the determination result indicates that the secondary charging threshold is required to be adjusted is obtained.

In the operation of adjusting the secondary charging threshold from the default value to the current smaller than the default value, the longer the continuous charging time, the smaller the present value, and a quantitative relationship of negative correlation between them may be represented by using a downtrend linear function or multiple functions.

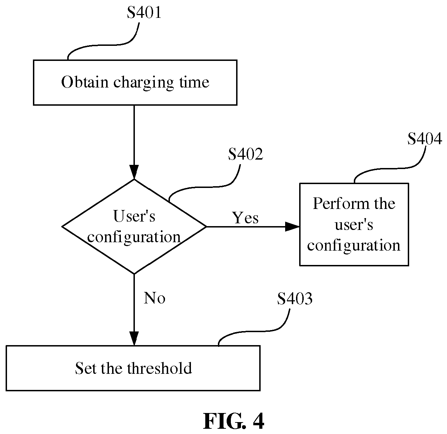

FIG. 4 shows a flowchart of adjusting the secondary charging threshold in the case of charging for long time according to an embodiment of the disclosure. The flow includes the following operations.

At S401, in the process of charging, the current charging time is obtained. When the charging device is connected, interruption related to charging is triggered. When the charging device is disconnected, the interruption related to charging is also triggered. Based on this, the time of connecting the charging device may be obtained.

At S402, based on S401, it is checked whether the user configures the secondary charging threshold and the charging timeout threshold.

At S403, when the user does not configure the secondary charging threshold, the secondary charging threshold is adjusted from the default value to the present value smaller than the default value. The secondary charging threshold is configured according to the following piecewise function.

At S404, when the user configures the secondary charging threshold, the user configuration is performed.

In the embodiment, the user configures the secondary charging threshold to be 80%, that is, when the battery level is smaller than 80%, secondary charging is performed.

In the actual use process of the mobile terminal, the user often encounter a scenario of charging for long time, for example, charging for a night. According to the different charging time, different secondary charging thresholds are set, which are represented by the following piecewise functions:

$$\text{threshold} \begin{cases} \text{threshold} = 95\%, \\ \text{when the charging time is between 6 hours and 24 hours;} \\ \text{threshold} = 80\%, \\ \text{when the charging time is greater than 24 hours} \end{cases}$$

The threshold in the above piecewise functions may be adjusted by the user according to the actual conditions.

The charging time is the time of continuously connecting the mobile terminal to the charging device. The charging time of most mobile terminals in the market is smaller than 4 hours. When the user uses the mobile terminal mildly, the charging time increases correspondingly. For the case of charging for a night, the charging time is usually greater than 6 hours. In this case, setting the threshold to 95% may basically ensure that there is no or a less secondary charging actions during standby charging. In the embodiment, for example, in the process of charging the mobile terminal, the user forgets to unplug the mobile terminal because of business trip or travel to make the mobile terminal in the charging state for long time; in this case, it is required to greatly reduce the secondary charging threshold, so as to reduce the number of secondary charging times of the mobile terminal when the user goes out or goes on a business trip. The damage to the battery caused by the continuous secondary charging is reduced by reducing the number of secondary charging times of the battery, thereby extending the service life of the battery and improving the service efficiency of the battery.

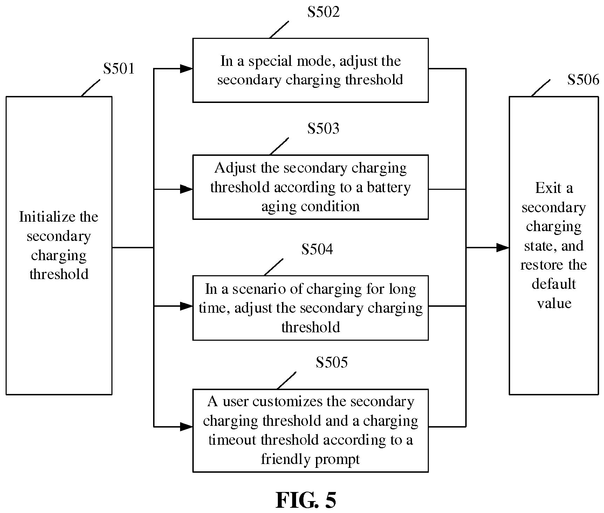

FIG. 5 shows a flowchart of adjusting the secondary charging threshold in different charging scenarios according to an embodiment of the disclosure. The flow includes the following operations.

At S501, when the system is started, the secondary charging threshold is initialized.

At S502, based on S501, after a special mode is detected, the secondary charging threshold is adjusted.

At S503, based on S501, according to the aging condition of the battery, the secondary charging threshold is adjusted. The more serious the aging degree, the smaller the secondary charging threshold. When the aging degree is serious to a certain extent, secondary charging is forbidden.

At S504, based on S501, when it is detected that the system is charged for long time, the secondary charging threshold is adjusted. If there is the charging timeout threshold set, after timeout, secondary charging is forbidden.

At S505, based on S501, the user may customize, according to the actual situation and preference, the secondary charging threshold and the charging timeout threshold based on a friendly prompt of the system, and the set secondary charging threshold and the charging timeout threshold will be saved in set data of the mobile terminal all the time. After the system reboots or starts again, the data configured by the user is first loaded, and then the secondary charging threshold and the charging timeout threshold are dynamically adjusted according to the data. If the user has customized the secondary charging threshold, the operations from S102 to S104 are unavailable. The system will not allow the user to customize a threshold greater than the default value. If the user has configured the charging timeout threshold, when the charging time reaches the threshold, the system forbids charging until a charging flow is triggered again. In the implementation, the user may freely set and select according to her/his own needs, so an individualized requirement of the user is further satisfied, and the user experience is improved.

At S506, based on S501, when exiting from the secondary charging state, the system clears dynamical adjustments of the secondary charging, and restores the settings to a default state.

It is to be noted that in so many dynamical adjustment factors, after initialization, the dynamical adjustments in the operations from S502 to S504 are first performed according to whether the user has configured the secondary charging threshold, and a minimum value, namely the strictest secondary charging threshold, is adopted when there is an intersection among the operations from S502 to S504.

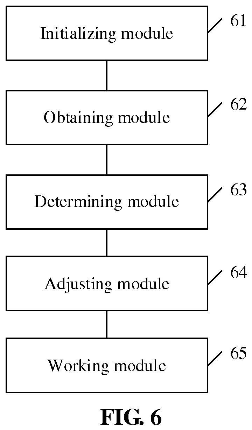

FIG. 6 shows a block diagram of the charging device according to an embodiment of the disclosure. The charging device includes an initializing module 61, an obtaining module 62, a determining module 63, an adjusting module 64 and a working module 65.

The initializing module 61 is configured to initialize the secondary charging threshold to obtain the default value of the secondary charging threshold.

The obtaining module 62 is configured to obtain the secondary charging threshold adjustment parameter when the electronic device is connected to the power adapter.

The determining module 63 is configured to determine, according to the secondary charging threshold adjustment parameter, whether the secondary charging threshold is required to be adjusted, to obtain the determination result.

The adjusting module 64 is configured to adjust, when the determination result indicates that the secondary charging threshold is required to be adjusted, the secondary charging threshold from the default value to the present value smaller than the default value.

The working module 65 is configured to perform the secondary charging control by using the present value.

Exemplarily, in practical applications, the above modules may be realized by an Application-Specific Integrated Circuit (ASIC) or a Field Programmable Gate Array (FPGA).

It is to be noted that the device shown in FIG. 6 is only an example in the embodiment of the disclosure. Some of the modules the device includes may be virtual modules, while others may be virtual modules and hardware modules, or only hardware modules, which is not limited by the embodiment of the disclosure.

In the embodiment, it is required to determine, according to the secondary charging threshold adjustment parameter, whether to reduce the secondary charging threshold. The secondary charging threshold adjustment parameter may be various parameters, which are respectively described as follows.

When the secondary charging threshold adjustment parameter is the working mode parameter, the determining module 63 is specifically configured to, when the working mode parameter indicates that the electronic device works in the vehicular mode, obtain the determination result indicating that it is required to adjust the secondary charging threshold.

When the secondary charging threshold adjustment parameter is the battery aging coefficient, the determining module 63 is specifically configured to, when the battery aging coefficient is smaller than the first predetermined threshold, obtain the determination result indicating that it is required to adjust the secondary charging threshold.

When the secondary charging threshold adjustment parameter is the continuous charging time, the determining module 63 is specifically configured to, when the continuous charging time is greater than the second predetermined threshold, obtain the determination result indicating that it is required to adjust the secondary charging threshold.

The device may implement the processes in the embodiments of the method as shown in FIG. 1 to FIG. 5, and may achieve the same beneficial effects, which will not be described here for avoiding a repeat.

In a specific embodiment of the disclosure, the charging device may be set at either the electronic device or the power adapter. When the charging device is set at the power adapter and the secondary charging threshold adjustment parameter is obtained from the electronic device, it is only required to set, at the power adapter, an interface for transmitting the secondary charging threshold adjustment parameter with the electronic device.

Those of ordinary skill in the art may understand that all or part of the flows in the embodiments of the method may be completed by instructing related hardware through a program. The program may be stored in a computer-readable storage medium. When the program is executed, the following operations are performed.

The secondary charging threshold is initialized to obtain the default value of the secondary charging threshold.

The secondary charging threshold adjustment parameter is obtained when the electronic device is connected to the power adapter.

It is determined, according to the secondary charging threshold adjustment parameter, whether the secondary charging threshold is required to be adjusted, to obtain the determination result.

When the determination result indicates that the secondary charging threshold is required to be adjusted, the secondary charging threshold is adjusted from the default value to the present value smaller than the default value.

The secondary charging control is performed by using the present value.

Alternatively, when the secondary charging threshold adjustment parameter is the working mode parameter, in the operation of determining, according to the secondary charging threshold adjustment parameter, whether the secondary charging threshold is required to be adjusted, when the working mode parameter indicates that the electronic device works in the card mode, the determination result indicates that the secondary charging threshold is required to be adjusted is obtained.

Alternatively, when the secondary charging threshold adjustment parameter is the battery aging coefficient, in the operation of determining, according to the secondary charging threshold adjustment parameter, whether the secondary charging threshold is required to be adjusted, when the battery aging coefficient is smaller than the first predetermined threshold, the determination result indicates that the secondary charging threshold is required to be adjusted is obtained.

Alternatively, in the operation of adjusting the secondary charging threshold from the default value to the present value smaller than the default value, the smaller the battery aging coefficient, the smaller the present value.

Alternatively, when the secondary charging threshold adjustment parameter is the continuous charging time, in the operation of determining, according to the secondary charging threshold adjustment parameter, whether the secondary charging threshold is required to be adjusted, when the continuous charging time is greater than the second predetermined threshold, the determination result indicates that the secondary charging threshold is required to be adjusted is obtained.

Alternatively, in the operation of adjusting the secondary charging threshold from the default value to the present value smaller than the default value, the longer the continuous charging time is, the smaller the present value is.

Those skilled in the art should understand that the embodiments of the disclosure may be provided as a method, a system, or a computer program product. So, the disclosure may adopt the forms of a hardware embodiment, a software embodiment, or an embodiment combining software and hardware. Moreover, the disclosure may adopt the form of a computer program product which is implemented on one or more computer available storage media (including, not limited to, a magnetic disk memory or an optical memory) including computer available program codes.

The disclosure is described according to the flowcharts and/or block diagrams of the method, the device (system) and the computer program product in the embodiments of the disclosure. It should be understood that each flow and/or block in the flowchart and/or block diagram, and the combination of the flow and/or block in the flowchart and/or block diagram can be implemented by the computer program instructions. These computer program instructions can be provided to a processor of a general-purpose computer, a special-purpose computer, an embedded processor or other programmable data processing devices to generate a machine, so that instructions which are executed by the processor of the computer or other programmable data processing devices generate a device which is used for implementing the specified functions in one or more flows of the flowchart and/or one or more blocks of the block diagram.

These computer program instructions may also be stored in the computer-readable memory which can guide the computer or other programmable data processing devices to work in a particular way, so that the instructions stored in the computer-readable memory generate a product including an instruction device. The instruction device implements the specified functions in one or more flows of the flowchart and/or one or more blocks of the block diagram.

These computer program instructions may also be loaded on the computer or other programmable data processing devices, so that a series of operations are performed on the computer or other programmable data processing devices to generate the processing implemented by the computer, and the instructions executed on the computer or other programmable data processing devices provide the operations for implementing the specified functions in one or more flows of the flowchart and/or one or more blocks of the block diagram.

The above is only the preferred embodiments of the disclosure and not intended to limit the protection scope of the disclosure.

## INDUSTRIAL APPLICABILITY

The secondary charging threshold is initialized to obtain the default value of the secondary charging threshold; the secondary charging threshold adjustment parameter is obtained when the electronic device is connected to the power adapter; it is determined, according to the secondary charging threshold adjustment parameter, whether the secondary charging threshold is required to be adjusted, to obtain the determination result; when the determination result indicates that the secondary charging threshold is required to be adjusted, the secondary charging threshold is adjusted from the default value to the present value smaller than the default value; and the secondary charging control is performed by using the present value. According to embodiments of the disclosure, it is possible to reduce battery loss, and extend the service life of the battery.

## Claims

1. A charging method, comprising:

initializing a secondary charging threshold to obtain a default value of the secondary charging threshold (S101);

obtaining a secondary charging threshold adjustment parameter when an electronic device is connected to a power adapter (S102), wherein when a battery level of the electronic device is smaller than the secondary charging threshold, secondary charging is performed;

determining, according to the secondary charging threshold adjustment parameter, whether the secondary charging threshold is required to be adjusted, to obtain a determination result (S103);

when the determination result indicates that the secondary charging threshold is required to be adjusted, adjusting the secondary charging threshold from the default value to a present value smaller than the default value (S104); and

performing secondary charging control by using the present value (S105);

**characterized in that** the step determining, according to the secondary charging threshold adjustment parameter, whether the secondary charging threshold is required to be adjusted, to obtain a determination result (S103) comprises:

the secondary charging threshold adjustment parameter is a continuous charging time; and

when the continuous charging time is greater than a predetermined threshold, obtaining the determination result indicating that it is required to adjust the secondary charging threshold, wherein the continuous charging time has a negative correlation with the present value of the secondary charging threshold.

2. A charging device, comprising:

an initializing module (61), configured to initialize a secondary charging threshold to obtain a default value of the secondary charging threshold;

an obtaining module (62), configured to obtain a secondary charging threshold adjustment parameter when an electronic device is connected to a power adapter, wherein when a battery level of the electronic device is smaller than the secondary charging threshold, secondary charging is performed;

a determining module (63), configured to determine, according to the secondary charging threshold adjustment parameter, whether the secondary charging threshold is required to be adjusted, to obtain a determination result;

an adjusting module (64), configured to adjust, when the determination result indicates that the secondary charging threshold is required to be adjusted, the secondary charging threshold from the default value to a present value smaller than the default value; and

a working module (65), configured to perform secondary charging control by using the present value;

**characterized in that** the secondary charging threshold adjustment parameter is a continuous charging time; and

the determining module (63) is further configured to, when the continuous charging time is smaller than a predetermined threshold, obtain the determination result indicating that it is required to adjust the secondary charging threshold, wherein the continuous charging time has a negative correlation with the present value of the secondary charging threshold.

3. A storage medium, comprising a program, wherein the program is used for performing a charging method according to claim 1.

**Patentansprüche**

1. Ladeverfahren, umfassend:

Initialisieren eines sekundären Ladeschwellenwerts, um einen Standardwert des sekundären Ladeschwellenwerts zu erlangen (S101);

Erlangen eines Einstellparameters für sekundären Ladeschwellenwert, wenn eine elektronische Vorrichtung mit einem Stromadapter (S102) verbunden ist, wobei ein sekundäres Laden ausgeführt wird, wenn ein Batteriestand der elektronischen Vorrichtung kleiner ist als der sekundäre Ladeschwellenwert;

Bestimmen, gemäß dem Einstellparameter für sekundären Ladeschwellenwert, ob die sekundäre Ladeschwelle eingestellt werden muss, um ein Bestimmungsresultat zu erlangen (S103);

wenn das Bestimmungsresultat angibt, dass der sekundäre Ladeschwellenwert eingestellt werden muss, Einstellen des sekundären Ladeschwellenwerts von dem Standardwert auf einen aktuellen Wert, der kleiner als der Standardwert ist (S104); und

Ausführen einer sekundären Ladesteuerung durch Verwenden des aktuellen Werts (S105);

**dadurch gekennzeichnet, dass** der Schritt, eines Bestimmens, gemäß dem Einstellparameter für sekundären Ladeschwellenwert, ob die sekundäre Ladeschwelle eingestellt werden muss, um ein Bestimmungsresultat zu erlangen (S103), Folgendes umfasst:

der Einstellparameter für sekundären Ladeschwellenwert ist eine kontinuierliche Ladezeit; und wenn die kontinuierliche Ladezeit größer als ein vorbestimmter Schwellenwert ist, Erlangen des Bestimmungsresultats, das angibt, dass es erforderlich ist, den sekundären Ladeschwellenwert einzustellen, wobei die kontinuierliche Ladezeit eine negative Korrelation mit dem aktuellen Wert des sekundären Ladeschwellenwerts aufweist.

2. Ladevorrichtung, umfassend:

ein Initialisierungsmodul (61), das konfiguriert ist, um einen sekundären Ladeschwellenwert zu initialisieren, um einen Standardwert des sekundären Ladeschwellenwerts zu erlangen;
ein Erlangungsmodul (62), das konfiguriert ist, um einen Einstellparameter für sekundären Ladeschwellenwert zu erlangen, wenn eine elektronische Vorrichtung mit einem Netzadapter verbunden ist, wobei ein sekundäres Laden ausgeführt wird, wenn ein Batteriestand der elektronischen Vorrichtung kleiner ist als der sekundäre Ladeschwellenwert;
ein Bestimmungsmodul (63), das konfiguriert ist, um gemäß dem Einstellparameter für sekundären Ladeschwellenwert zu bestimmen, ob der sekundäre Ladeschwellenwert eingestellt werden muss, um ein Bestimmungsresultat zu erlangen;
ein Einstellmodul (64), das konfiguriert ist, um, wenn das Bestimmungsresultat angibt, dass der sekundäre Ladeschwellenwert eingestellt werden muss, den sekundären Ladeschwellenwert von dem Standardwert auf einen aktuellen Wert einstellt, der kleiner als der Standardwert ist; und
ein Arbeitsmodul (65), das konfiguriert ist, um eine sekundäre Ladesteuerung durch Verwenden des aktuellen Werts auszuführen;
**dadurch gekennzeichnet, dass** der Einstellparameter für sekundären Ladeschwellenwert eine kontinuierliche Ladezeit ist; und
das Bestimmungsmodul (63) ferner konfiguriert ist, um, wenn die kontinuierliche Ladezeit kleiner ist als ein vorbestimmter Schwellenwert, das Bestimmungsresultat zu erlangen, das angibt, dass es erforderlich ist, den sekundären Ladeschwellenwert einzustellen, wobei die kontinuierliche Ladezeit eine negative Korrelation mit dem aktuellen Wert des sekundären Ladeschwellenwerts aufweist.

3. Speichermedium, umfassend ein Programm, wobei das Programm zum Ausführen eines Ladeverfahrens nach Anspruch 1 verwendet wird.


**Revendications**

1. Procédé de charge consistant à :

initialiser un seuil de charge secondaire pour obtenir une valeur par défaut du seuil de charge secondaire (S101) ;
obtenir un paramètre d'ajustement de seuil de charge secondaire lorsqu'un dispositif électronique est connecté à un adaptateur d'alimentation (S102), dans lequel, lorsqu'un niveau de batterie du dispositif électronique est inférieur au seuil de charge secondaire, une charge secondaire est effectuée ;
déterminer, en fonction du paramètre d'ajustement de seuil de charge secondaire, si le seuil de charge secondaire doit être ajusté, pour obtenir un résultat de détermination (S103) ;
lorsque le résultat de détermination indique que le seuil de charge secondaire doit être ajusté, faire passer le seuil de charge secondaire de la valeur par défaut à une valeur actuelle inférieure à la valeur par défaut (S104) ; et
effectuer une commande de charge secondaire en utilisant la valeur actuelle (S105) ;
**caractérisé en ce que** l'étape consistant à déterminer, en fonction du paramètre d'ajustement de seuil de charge secondaire, si le seuil de charge secondaire doit être ajusté, pour obtenir un résultat de détermination (S103), implique que :

le paramètre d'ajustement du seuil de charge secondaire est un temps de charge continu ; et
consiste, lorsque le temps de charge continu est supérieur à un seuil prédéterminé, à obtenir le résultat de détermination indiquant qu'il est nécessaire d'ajuster le seuil de charge secondaire, dans lequel le temps de charge continu a une corrélation négative avec la valeur actuelle du seuil de charge secondaire.

**2.** Dispositif de charge, comprenant :

un module d'initialisation (61), configuré pour initialiser un seuil de charge secondaire pour obtenir une valeur par défaut du seuil de charge secondaire ;

un module d'obtention (62), configuré pour obtenir un paramètre d'ajustement de seuil de charge secondaire lorsqu'un dispositif électronique est connecté à un adaptateur d'alimentation, dans lequel, lorsqu'un niveau de batterie du dispositif électronique est inférieur au seuil de charge secondaire, une charge secondaire est effectuée ;

un module de détermination (63), configuré pour déterminer, en fonction du paramètre d'ajustement de seuil de charge secondaire, si le seuil de charge secondaire doit être ajusté, pour obtenir un résultat de détermination ;

un module d'ajustement (64), configuré pour, lorsque le résultat de détermination indique que le seuil de charge secondaire doit être ajusté, faire passer le seuil de charge secondaire de la valeur par défaut à une valeur actuelle inférieure à la valeur par défaut ; et

un module de fonctionnement (65), configuré pour effectuer une commande de charge secondaire en utilisant la valeur actuelle ;

**caractérisé en ce que** le paramètre d'ajustement du seuil de charge secondaire est un temps de charge continu ; et

le module de détermination (63) est en outre configuré pour, lorsque le temps de charge continu est inférieur à un seuil prédéterminé, obtenir le résultat de détermination indiquant qu'il est nécessaire d'ajuster le seuil de charge secondaire, dans lequel le temps de charge continu a une corrélation négative avec la valeur actuelle du seuil de charge secondaire.

**3.** Support de stockage, comprenant un programme, dans lequel le programme est utilisé pour exécuter un procédé de charge selon la revendication 1.

A secondary charging threshold is initialized to obtain a default value of the secondary charging threshold

S101

A secondary charging threshold adjustment parameter is obtained when an electronic device is connected to a power adapter

S102

It is determined, according to the secondary charging threshold adjustment parameter, whether the secondary charging threshold is required to be adjusted, to obtain a determination result

S103

When the determination result indicates that the secondary charging threshold is required to be adjusted, the secondary charging threshold is adjusted from the default value to a present value smaller than the default value

S104

Secondary charging control is performed by using the present value

S105

**FIG. 1**

S201

Enter a vehicular mode

S202

User's configuration

Yes → Perform the user's configuration S204

No

S203

Adjust the secondary charging threshold to 60%

**FIG. 2**

S301

Detect a battery aging state

S302

S304

User's configuration

Yes

Perform the user's configuration

No

S303

Adjust the threshold

FIG. 4

S502

In a special mode, adjust the
secondary charging threshold

S501

S503

Adjust the secondary charging
threshold according to a battery
aging condition

Initialize the
secondary
charging
threshold

S504

In a scenario of charging for long
time, adjust the secondary charging
threshold

S506

Exit a
secondary
charging
state, and
restore the
default
value

S505

A user customizes the secondary
charging threshold and a charging
timeout threshold according to a
friendly prompt

**FIG. 5**

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20141217958 A1, VERDUN GARY JOSEPH
- US 2016172886 A1, KEATES ANDREW
- WO 20161085316 A2
- US 20131132742 A1, ZHAO SHUANGCHENG